# EUROPEAN PATENT APPLICATION

(11) **EP 4 553 672 A1**
(43) Date of publication of application: **14.05.2025**
(21) Application number: 23861974.6
(22) Date of filing: 21.06.2023
(51) Int. Cl.: G06F 16/22

(54) **DATA PROCESSING METHOD AND DEVICE**

(30) Priority: 08.09.2022 CN 202211097889
(71) Applicant: Huawei Technologies Co., Ltd., Shenzhen, Guangdong 518129 (CN)
(72) Inventor: LYU, Zheng, Shenzhen, Guangdong 518129 (CN); FENG, Ben, Shenzhen, Guangdong 518129 (CN)
(74) Representative: MERH-IP Matias Erny Reichl Hoffmann Patentanwälte PartG mbB
(86) International application number: PCT/CN2023/101752
(87) International publication number: WO 2024/051271

(57) **Abstract**

This application provides a data processing method and an apparatus, and relates to the field of communication technologies. In the method, an acceleration apparatus sorts a first dataset to obtain a second dataset, where the first dataset and the second dataset each include a plurality of pieces of data; divides the second dataset to obtain a plurality of data subsets; separately processes the plurality of data subsets to obtain a plurality of subtrees, where one data subset corresponds to one subtree; and obtains a tree of the second dataset based on the plurality of subtrees. In a process of creating a tree by the acceleration apparatus, a processor or the acceleration apparatus does not need to generate an instruction, a decoding instruction, or the like, a tree creation procedure is simplified, and tree creation efficiency is improved, thereby improving data processing efficiency. In addition, the acceleration apparatus may obtain the plurality of subtrees in parallel, so that the tree creation efficiency can be improved, and the data processing efficiency of the acceleration apparatus can be improved.

## Description

### CROSS-REFERENCE TO RELATED APPLICATIONS

This application claims priority to Chinese Patent Application No. 202211097889.0, filed with the China National Intellectual Property Administration on September 8, 2022 and entitled "DATA PROCESSING METHOD AND APPARATUS", which is incorporated herein by reference in its entirety.

### TECHNICAL FIELD

This application relates to the field of computer technologies, and in particular, to a data processing method and an apparatus.

### BACKGROUND

Data can provide a basis for an enterprise to make decisions. Data collected by a computing device of the enterprise is usually scattered, and the computing device usually needs to process the data to obtain a data processing result. In this way, a staff member of the enterprise may determine a corresponding decision based on the data processing result.

Currently, data processing is usually performed by a central processing unit (central processing unit, CPU) in the computing device. In a process of processing each piece of data, the CPU needs to separately perform decoding to obtain an instruction corresponding to the data, and then execute the instruction. A process of processing a single piece of data by the CPU is complex, and efficiency of processing the single piece of data by the CPU is low. In addition, once a large amount of data needs to be processed, data processing efficiency of the CPU is further reduced.

### SUMMARY

This application provides a data processing method and an apparatus, to improve data processing efficiency.

According to a first aspect, an embodiment of this application provides a data processing method. The method may be performed by an acceleration apparatus, the acceleration apparatus is, for example, a system on chip (system on chip, SoC) or a data processing unit (data processing unit, DPU), and the method includes: sorting a first dataset to obtain a second dataset, where the first dataset and the second dataset each include a plurality of pieces of data; dividing the second dataset to obtain N data subsets, where each of the N data subsets includes at least two pieces of consecutively arranged data in the second dataset, and N is an integer greater than or equal to 2; determining an i^{th} subtree based on an i^{th} data subset in the N data subsets, where i is any positive integer from 1 to N, a total of N subtrees are obtained, and the i^{th} subtree is used to search for data included in the i^{th} data subset; and performing a merge operation on the N subtrees to obtain a tree of the second dataset, where the tree is used to search for the data included in the second dataset.

In this embodiment of this application, the acceleration apparatus may divide a sorted dataset to obtain a plurality of data subsets, and determine a plurality of subtrees based on the plurality of data subsets, to determine a tree based on the plurality of subtrees. In a process of determining the tree by the acceleration apparatus, a process in which a processor or the acceleration apparatus generates an instruction and a decoding instruction, or another process is not needed, a data processing process is reduced, and this helps improve data processing efficiency. In addition, the acceleration apparatus may determine the plurality of subtrees in parallel based on the plurality of data subsets, to improve efficiency of processing the plurality of subtrees by the acceleration apparatus, and improve efficiency of determining a tree of a dataset. Because a process of creating the tree belongs to the data processing process, efficiency of determining the tree is improved, and the data processing efficiency is improved. Optionally, the acceleration apparatus may be a component that is in the computing device and that is independent of a processor, and a dedicated acceleration apparatus processes data, so that load of the processor in the computing device can be reduced.

In a possible implementation, a manner in which the acceleration apparatus sorts the first dataset specifically includes: determining a first data group, where the first data group is a result of sorting a part of data in the first dataset; comparing data at each first location in the first data group with target data at a location corresponding to the first location in a second data group, to determine a target location, where the target location is a location into which the target data is inserted in the first data group, the second data group and the first data group include a same amount of data, any data included in the second data group is the target data, and the target data is data other than the part of data in the first dataset; and inserting the target data into the target location, to obtain the second dataset.

In the foregoing implementation, the acceleration apparatus may compare each piece of data in sorted data (that is, the first data group) with to-be-sorted data (the target data) in parallel, instead of comparing one piece of data with a plurality of pieces of data one by one. In other words, it is equivalent to comparing the target data with a plurality of pieces of data in parallel. This improves efficiency of sorting a dataset by the acceleration apparatus, and a process of sorting the dataset also belongs to the data processing process. Therefore, the data processing efficiency can be improved. In addition, in a process in which the acceleration apparatus performs sorting, a process in which the acceleration apparatus or the processor generates a decoding instruction or another process is not needed, and this also helps improve the data processing efficiency.

In a possible implementation, the acceleration apparatus may further group the second dataset. A process in which the acceleration apparatus groups the second dataset includes: determining a third data group, where the third data group includes a plurality of target keys, the target key is a key of a target group, and the third data group and the second dataset include a same amount of data; comparing data at each second location in the second dataset with data at a location corresponding to the second location in the third data group, to determine at least one piece of data that matches the target key and that is in the second dataset; determining the at least one piece of data as the target group; and writing information about the target group and the target group into an external memory, where the information about the target group includes the target key.

In the foregoing implementation, the acceleration apparatus may compare all to-be-grouped data (that is, the second dataset) with a grouping key of the target group, so that the at least one piece of data that matches the target key can be determined at a time, and it is determined that the target group includes the at least one piece of data. This improves efficiency of grouping a dataset by the acceleration apparatus, and a process of grouping the dataset also belongs to the data processing process. Therefore, the data processing efficiency can be improved.

In a possible implementation, the information about the target group may further include one or more of an amount of the at least one piece of data, a maximum value of the at least one piece of data, a minimum value of the at least one piece of data, and a summation result of the at least one piece of data.

In the foregoing implementation, after determining the target group, the acceleration apparatus may further determine the information about the target group, to provide more data statistics information in the target group for a user.

In a possible implementation, the method further includes: determining a target execution plan, where the target execution plan indicates an operation to be performed on the first dataset.

In the foregoing implementation, the acceleration apparatus may determine the target execution plan. The target execution plan includes the operation to be performed on the first dataset, for example, one or more of the foregoing sorting operation, grouping operation, or tree creation operation. In this way, the acceleration apparatus subsequently performs a corresponding operation on the first dataset based on the target execution plan.

In a possible implementation, the method further includes: receiving a first request from the processor, where the first request is used to request to process the first dataset; and obtaining the first dataset based on the first request.

In the foregoing implementation, the acceleration apparatus may receive the first request from the processor, and obtain the first dataset based on the first request. This provides a manner in which the acceleration apparatus obtains the first dataset. In addition, the processor does not need to process the first dataset, to help reduce a processing amount of the processor.

In a possible implementation, both the acceleration apparatus and the processor may be disposed in the computing device, and the acceleration apparatus may be connected to the processor by using PCIe.

In the foregoing implementation, the acceleration apparatus may be connected to the processor by using the PCIe, and a connection manner between the acceleration apparatus and the processor does not need to be separately designed, to help reduce costs of the computing device. In addition, the acceleration apparatus may replace the processor to perform one or more of the sorting operation, the grouping operation, the tree creation operation, or the like on the data, to help reduce the processing amount of the processor.

According to a second aspect, an embodiment of this application provides a data processing method. The method may be performed by an acceleration apparatus, and the method includes: sorting a first dataset to obtain a second dataset, where the first dataset and the second dataset each include a plurality of pieces of data; determining a third data group, where the third data group includes a plurality of first keys, the first key is a key of a target group, and the third data group and the second dataset include a same amount of data; comparing data at each second location in the second dataset with data at a location corresponding to the second location in the third data group, to determine at least one piece of data that matches a target key and that is in the second dataset; determining the at least one piece of data as the target group; and writing information about the target group and the target group into an external memory, where the information about the target group includes the target key.

In a possible implementation, the information about the target group may further include one or more of an amount of the at least one piece of data, a maximum value of the at least one piece of data, a minimum value of the at least one piece of data, and a summation result of the at least one piece of data.

In a possible implementation, the sorting a first dataset to obtain a second dataset includes: determining a first data group, where the first data group is a result of sorting a part of data in the first dataset; comparing data at each first location in the first data group with target data at a location corresponding to the first location in a second data group, to determine a target location, where the target location is a location into which the target data is inserted in the first data group, the second data group and the first data group include a same amount of data, any data included in the second data group is the target data, and the target data is data other than the part of data in the first dataset; and inserting the target data into the target location, to obtain the second dataset.

In a possible implementation, the method includes: dividing the second dataset to obtain N data subsets, where each of the N data subsets includes at least two pieces of consecutively arranged data in the second dataset, and N is an integer greater than or equal to 2; determining an i^{th} subtree based on an i^{th} data subset in the N data subsets, where i is any positive integer from 1 to N, a total of N subtrees are obtained, and the i^{th} subtree is used to search for data included in the i^{th} data subset; and performing a merge operation on the N subtrees to obtain a tree of the second dataset, where the tree is used to search for the data included in the second dataset.

In a possible implementation, the method further includes: determining a target execution plan, where the target execution plan indicates an operation to be performed on the first dataset.

In a possible implementation, the method further includes: receiving a first request from a processor, where the first request is used to request to process the first dataset; and obtaining the first dataset based on the first request.

In a possible implementation, the method further includes: both the acceleration apparatus and the processor are disposed in a computing device, and the acceleration apparatus is connected to the processor by using PCIe.

According to a third aspect, an embodiment of this application provides a data processing method. The method may be performed by an acceleration apparatus, and the method includes: obtaining a first dataset, where the first dataset includes a plurality of pieces of data; determining a first data group, where the first data group is a result of sorting a part of data in the first dataset; comparing data at each first location in the first data group with target data at a location corresponding to the first location in a second data group, to determine a target location, where the target location is a location into which the target data is inserted in the first data group, the second data group and the first data group include a same amount of data, any data included in the second data group is the target data, and the target data is data other than the part of data in the first dataset; and inserting the target data into the target location, to obtain a second dataset.

In a possible implementation, the method includes: determining a third data group, where the third data group includes a plurality of first keys, the first key is a key of a target group, and the third data group and the second dataset include a same amount of data; comparing data at each second location in the second dataset with data at a location corresponding to the second location in the third data group, to determine at least one piece of data that matches a target key and that is in the second dataset; determining the at least one piece of data as the target group; and writing information about the target group and the target group into an external memory, where the information about the target group includes the target key.

In a possible implementation, the information about the target group further includes one or more of an amount of the at least one piece of data, a maximum value of the at least one piece of data, a minimum value of the at least one piece of data, and a summation result of the at least one piece of data.

In a possible implementation, the method includes: dividing the second dataset to obtain N data subsets, where each of the N data subsets includes at least two pieces of consecutively arranged data in the second dataset, and N is an integer greater than or equal to 2; determining an i^{th} subtree based on an i^{th} data subset in the N data subsets, where i is any positive integer from 1 to N, a total of N subtrees are obtained, and the i^{th} subtree is used to search for data included in the i^{th} data subset; and performing a merge operation on the N subtrees to obtain a tree of the second dataset, where the tree is used to search for the data included in the second dataset.

In a possible implementation, the method further includes: determining a target execution plan, where the target execution plan indicates an operation to be performed on the first dataset.

In a possible implementation, the method further includes: receiving a first request from a processor, where the first request is used to request to process the first dataset; and obtaining the first dataset based on the first request.

In a possible implementation, the method further includes: both the acceleration apparatus and the processor are disposed in a computing device, and the acceleration apparatus is connected to the processor by using PCIe.

According to a fourth aspect, an embodiment of this application provides an acceleration apparatus. The apparatus includes: a sorting module, configured to sort a first dataset to obtain a second dataset, where the first dataset and the second dataset each include a plurality of pieces of data; a tree creation module, configured to divide the second dataset to obtain N data subsets, where each of the N data subsets includes at least two pieces of consecutively arranged data in the second dataset, and N is an integer greater than or equal to 2; determine an i^{th} subtree based on an i^{th} data subset in the N data subsets, where i is any positive integer from 1 to N, a total of N subtrees are obtained, and the i^{th} subtree is used to search for data included in the i^{th} data subset; and perform a merge operation on the N subtrees to obtain a tree of the second dataset, where the tree is used to search for the data included in the second dataset.

In a possible implementation, the sorting module is specifically configured to: determine a first data group, where the first data group is a result of sorting a part of data in the first dataset; compare data at each first location in the first data group with target data at a location corresponding to the first location in a second data group, to determine a target location, where the target location is a location into which the target data is inserted in the first data group, the second data group and the first data group include a same amount of data, any data included in the second data group is the target data, and the target data is data other than the part of data in the first dataset; and insert the target data into the target location, to obtain the second dataset.

In a possible implementation, the apparatus further includes a grouping module, and the grouping module is specifically configured to: determine a third data group, where the third data group includes a plurality of target keys, the target key is a key of a target group, and the third data group and the second dataset include a same amount of data; compare data at each second location in the second dataset with data at a location corresponding to the second location in the third data group, to determine at least one piece of data that matches the target key and that is in the second dataset; determine the at least one piece of data as the target group; and write information about the target group and the target group into an external memory, where the information about the target group includes the target key.

In a possible implementation, the information about the target group further includes one or more of an amount of the at least one piece of data, a maximum value of the at least one piece of data, a minimum value of the at least one piece of data, and a summation result of the at least one piece of data.

In a possible implementation, the apparatus further includes an execution plan determining module, where the execution plan determining module is configured to determine a target execution plan, and the target execution plan indicates an operation to be performed on the first dataset.

In a possible implementation, the apparatus includes a data obtaining module, where the data obtaining module is configured to: receive a first request from a processor, where the first request is used to request to process the first dataset; and obtain the first dataset based on the first request.

According to a fifth aspect, an embodiment of this application provides an acceleration apparatus. The apparatus includes: a sorting module, configured to sort a first dataset to obtain a second dataset, where the first dataset and the second dataset each include a plurality of pieces of data; and determine a third data group, where the third data group includes a plurality of first keys, the first key is a key of a target group, and the third data group and the second dataset include a same amount of data; and a grouping module, configured to compare data at each second location in the second dataset with data at a location corresponding to the second location in the third data group, to determine at least one piece of data that matches a target key and that is in the second dataset; determine the at least one piece of data as the target group; and write information about the target group and the target group into an external memory, where the information about the target group includes the target key.

In a possible implementation, the information about the target group further includes one or more of an amount of the at least one piece of data, a maximum value of the at least one piece of data, a minimum value of the at least one piece of data, and a summation result of the at least one piece of data.

In a possible implementation, the sorting module is specifically configured to: determine a first data group, where the first data group is a result of sorting a part of data in the first dataset; compare data at each first location in the first data group with target data at a location corresponding to the first location in a second data group, to determine a target location, where the target location is a location into which the target data is inserted in the first data group, the second data group and the first data group include a same amount of data, any data included in the second data group is the target data, and the target data is data other than the part of data in the first dataset; and insert the target data into the target location, to obtain the second dataset.

In a possible implementation, the apparatus further includes a tree creation module, where the tree creation module is configured to divide the second dataset to obtain N data subsets, where each of the N data subsets includes at least two pieces of consecutively arranged data in the second dataset, and N is an integer greater than or equal to 2; determine an i^{th} subtree based on an i^{th} data subset in the N data subsets, where i is any positive integer from 1 to N, a total of N subtrees are obtained, and the i^{th} subtree is used to search for data included in the i^{th} data subset; and perform a merge operation on the N subtrees to obtain a tree of the second dataset, where the tree is used to search for the data included in the second dataset.

In a possible implementation, the apparatus further includes an execution plan determining module, where the execution plan determining module is configured to determine a target execution plan, and the target execution plan indicates an operation to be performed on the first dataset.

In a possible implementation, the apparatus further includes a data obtaining module, where the data obtaining module is configured to: receive a first request from a processor, where the first request is used to request to process the first dataset; and obtain the first dataset based on the first request.

In a possible implementation, both the apparatus and the processor are disposed in a computing device, and the apparatus is connected to the processor by using peripheral component interconnect express PCIe.

According to a sixth aspect, an embodiment of this application provides an acceleration apparatus. The apparatus includes: a data obtaining module, configured to obtain a first dataset, where the first dataset includes a plurality of pieces of data; and a sorting module, configured to determine a first data group, where the first data group is a result of sorting a part of data in the first dataset; compare data at each first location in the first data group with target data at a location corresponding to the first location in a second data group, to determine a target location, where the target location is a location into which the target data is inserted in the first data group, the second data group and the first data group include a same amount of data, any data included in the second data group is the target data, and the target data is data other than the part of data in the first dataset; and insert the target data into the target location, to obtain a second dataset.

In a possible implementation, the apparatus further includes a grouping module, configured to determine a third data group, where the third data group includes a plurality of first keys, the first key is a key of a target group, and the third data group and the second dataset include a same amount of data; compare data at each second location in the second dataset with data at a location corresponding to the second location in the third data group, to determine at least one piece of data that matches a target key and that is in the second dataset; determine the at least one piece of data as the target group; and write information about the target group and the target group into an external memory, where the information about the target group includes the target key.

In a possible implementation, the information about the target group further includes one or more of an amount of the at least one piece of data, a maximum value of the at least one piece of data, a minimum value of the at least one piece of data, and a summation result of the at least one piece of data.

In a possible implementation, the apparatus further includes a tree creation module, configured to: divide the second dataset to obtain N data subsets, where each of the N data subsets includes at least two pieces of consecutively arranged data in the second dataset, and N is an integer greater than or equal to 2; determine an i^{th} subtree based on an i^{th} data subset in the N data subsets, where i is any positive integer from 1 to N, a total of N subtrees are obtained, and the i^{th} subtree is used to search for data included in the i^{th} data subset; and perform a merge operation on the N subtrees to obtain a tree of the second dataset, where the tree is used to search for the data included in the second dataset.

In a possible implementation, the apparatus further includes an execution plan determining module, configured to determine a target execution plan, and the target execution plan indicates an operation to be performed on the first dataset.

In a possible implementation, the apparatus further includes a data obtaining module, configured to receive a first request from a processor, where the first request is used to request to process the first dataset; and obtain the first dataset based on the first request.

In a possible implementation, both the apparatus and the processor are disposed in a computing device, and the apparatus is connected to the processor by using peripheral component interconnect express PCIe.

According to a seventh aspect, an embodiment of this application provides an acceleration apparatus, including a processor and a power supply circuit. The power supply circuit supplies power to the processor, and the processor is configured to perform the data processing method in any one of the first aspect to the third aspect.

In a possible implementation, the acceleration apparatus further includes another component, for example, an antenna, an input/output module, and an interface. The components may be hardware, software, or a combination of software and hardware.

According to an eighth aspect, an embodiment of this application provides a computing device, where the computing device includes the acceleration apparatus in the seventh aspect.

According to a ninth aspect, an embodiment of this application provides a computing device, where the computing device includes an acceleration apparatus and a processor. The processor is configured to send a first request to the acceleration apparatus, where the first request is used to request the acceleration apparatus to process a first dataset; and the acceleration apparatus is configured to perform the data processing method in any one of the first aspect to the third aspect, to process the first dataset.

According to a tenth aspect, an embodiment of this application provides a chip system. The chip system includes a processor and an interface. The processor is configured to invoke instructions from the interface and run the instructions, and when the processor executes the instructions, the data processing method in any one of the first aspect to the third aspect is implemented.

According to an eleventh aspect, a computer-readable storage medium is provided. The computer-readable storage medium is configured to store a computer program or instructions. When the computer program or instructions are run, the data processing method in any one of the first aspect to the third aspect is implemented.

According to a twelfth aspect, a computer program product including instructions is provided. When the computer program product runs on a computer, the data processing method in any one of the first aspect to the third aspect is implemented.

For beneficial effects of the second aspect to the twelfth aspect, refer to the beneficial effects described in the first aspect. Details are not described herein again.

### BRIEF DESCRIPTION OF DRAWINGS

FIG. 1 is a diagram of a scenario to which an embodiment of this application is applicable;
FIG. 2 is a diagram of another scenario to which an embodiment of this application is applicable;
FIG. 3 is a diagram of a structure of a data processing system according to an embodiment of this application;
FIG. 4 is a diagram of a structure of another data processing system according to an embodiment of this application;
FIG. 5 is a diagram of a structure of still another data processing system according to an embodiment of this application;
FIG. 6 is a schematic flowchart 1 of a data processing method according to an embodiment of this application;
FIG. 7 is a diagram of a principle of performing a conversion operation on a first dataset according to an embodiment of this application;
FIG. 8 is a diagram of a process of sorting a first dataset according to an embodiment of this application;
FIG. 9 is a diagram of a process of creating a tree according to an embodiment of this application;
FIG. 10 is a diagram of a principle of creating a tree according to an embodiment of this application;
FIG. 11 is a diagram of a process of grouping data according to an embodiment of this application;
FIG. 12 is a diagram of a structure of a page according to an embodiment of this application;
FIG. 13 to FIG. 16 are schematic flowcharts of several data processing methods according to embodiments of this application; and
FIG. 17 and FIG. 18 are diagrams of structures of two acceleration apparatuses according to embodiments of this application.

### DESCRIPTION OF EMBODIMENTS

To make objectives, the technical solutions, and advantages of embodiments of this application clearer, the following further describes embodiments of this application in detail with reference to the accompanying drawings.

The following describes some terms in embodiments of this application, to facilitate understanding of a person skilled in the art.
1. A terminal device is a device having a wireless transceiver function, and may be a fixed device, a mobile device, a handheld device, a wearable device, a vehicle-mounted device, or a wireless apparatus (for example, a communication module or a chip system) disposed in the foregoing device. The terminal device is configured to connect to a person, an object, a machine, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like.
2. A node may be a single device. The node shown in this embodiment of this application may alternatively be a logical concept, for example, a software module. This is not specifically limited in this embodiment of this application.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. The character "/" usually indicates an "or" relationship between the associated objects. For example, A/B indicates A or B. "At least one item (piece) of the following" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

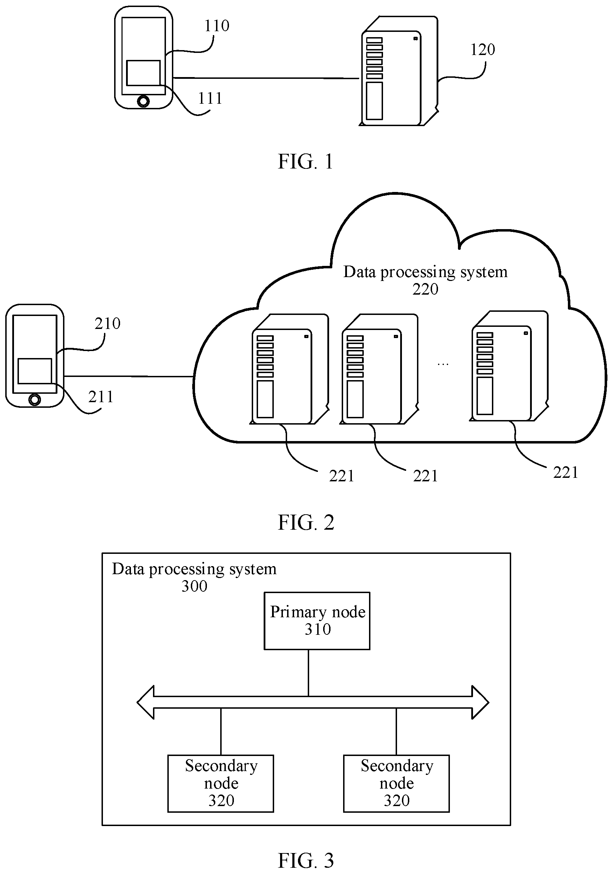

FIG. 1 is a diagram of a scenario to which an embodiment of this application is applicable. Alternatively, FIG. 1 may be understood as a diagram of a structure of a data processing system according to an embodiment of this application. As shown in FIG. 1, the scenario includes a terminal device 110, a client 111 running on the terminal device 110, and a computing device 120. The terminal device 110 and the computing device 120 may communicate with each other by using an Ethernet or wireless network (for example, wireless fidelity (wireless fidelity, Wi-Fi) or 5^{th} generation (5^{th} generation, 5G) communication) technology.

The client 111 may be a software module or a program. A user may initiate a data processing request to the computing device 120 via the client 111. The data processing request is, for example, a data read request for requesting to read data in a database, or a data write request for requesting to write data into the database. The computing device 120 may perform a read operation or a write operation on the database. The computing device 120 may perform corresponding data processing based on the data processing request. The computing device 120 usually refers to a device having a processing capability, for example, a server or a terminal device.

FIG. 2 is a diagram of a scenario to which an embodiment of this application is applicable. Alternatively, FIG. 2 may be understood as a diagram of a structure of a data processing system according to an embodiment of this application. Different from FIG. 1, the data processing system 220 in FIG. 2 includes one or more computing devices 221, and the data processing system 220 communicates with a client 211 to process a data processing request of the client 211.

As shown in FIG. 2, the scenario includes a terminal device 210, the client 211 running on the terminal device 210, and the data processing system 220. The terminal device 210 and the data processing system 220 may communicate with each other by using an Ethernet or wireless network (for example, Wi-Fi or 5^{th} generation (5^{th} generation, 5G) communication) technology.

In FIG. 2, an example in which a quantity of computing devices 221 included in the data processing system 220 is three is used for description. Actually, the quantity of computing devices 221 included in the data processing system 220 is not limited. Structures of any two computing devices 221 included in the data processing system 220 may be the same.

In a possible implementation, the data processing system 220 may be a distributed data processing system. Distributed data processing systems may include a centralized distributed data processing system and a decentralized distributed data processing system.

FIG. 3 is a diagram of a structure of a distributed data processing system according to an embodiment of this application. FIG. 3 may be, for example, a diagram of a structure of a centralized distributed data processing system. As shown in FIG. 3, the data processing system 300 includes a primary node 310 and one or more secondary nodes 320. The primary node 310 may also be referred to as a control node, a management node, or the like, and the secondary node 320 may also be referred to as a worker node. The primary node 310 may communicate with a client, and the primary node 310 may also communicate with any secondary node 320.

The primary node 310 is configured to receive a data processing request from the client, and allocate the data processing request of the client to a secondary node 320 in the one or more secondary nodes 320 for processing. The secondary node 320 is configured to process the data processing request. For a meaning of the client, refer to the foregoing content. The client is, for example, the client 211 in FIG. 2. Both the primary node 310 and the secondary node 320 may be implemented by using computing devices. For example, a primary node 310 is a computing device, and a secondary node 320 is a computing device.

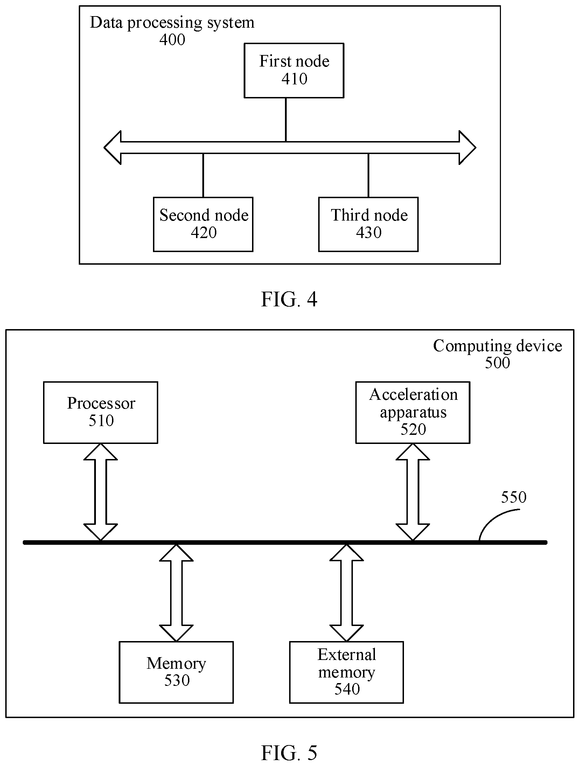

FIG. 4 is a diagram of a structure of another distributed data processing system according to an embodiment of this application. Alternatively, FIG. 4 may be, for example, a diagram of a structure of a decentralized distributed data processing system. Different from FIG. 3, any two nodes in FIG. 4 have a same function.

As shown in FIG. 4, the data processing system 400 includes a plurality of nodes (for example, a first node 410, a second node 420, and a third node 430 shown in FIG. 4). Any one of the first node 410, the second node 420, and the third node 430 may communicate with a client, and is configured to receive a data processing request from the client and process the data processing request. Any one of the first node 410, the second node 420, and the third node 430 may be implemented by using a computing device. For example, any one node is a computing device.

FIG. 5 is a diagram of a structure of a computing device according to an embodiment of this application. The computing device 500 in FIG. 5 may be the computing device 120 in FIG. 1, the computing device 221 in FIG. 2, the primary node 310 in FIG. 3, the secondary node 320 in FIG. 3, the first node 410 in FIG. 4, the second node 420 in FIG. 4, or the third node 430 in FIG. 4.

As shown in FIG. 5, the computing device 500 includes a processor 510, an acceleration apparatus 520, a memory 530, and an external memory 540. The processor 510, the acceleration apparatus 520, the memory 530, and the external memory 540 may communicate with each other through a bus 550. The bus 550 is represented by a thick line in FIG. 5, and the bus 550 may be a line based on peripheral component interconnect express (peripheral component interconnect express, PCIe).

The processor 510 may be a central processing unit (central processing unit, CPU), an application-specific integrated circuit (application-specific integrated circuit, ASIC), a field programmable gate array (field programmable gate array, FPGA), an artificial intelligence (artificial intelligence, AI) chip, a system on chip (system on chip, SoC), a complex programmable logic device (complex programmable logic device, CPLD), or a graphics processing unit (graphics processing unit, GPU).

The acceleration apparatus 520 is a device specially configured to process data, and may be a SoC, a DPU, an intelligent network interface card, or the like.

The memory 530 may include a volatile memory (volatile memory), for example, a random access memory (random access memory, RAM) or a dynamic random access memory (dynamic random access memory, DRAM), or may include a non-volatile memory (non-volatile memory), for example, a storage class memory (storage class memory, SCM), or may include a combination of a volatile memory and a non-volatile memory.

The memory 530 may further include a software module, such as an operating system, needed for running a process. The operating system may be LINUX^{™}, UNIX^{™} WINDOWS^{™}, or the like. The memory 530 may further store data in a database. For example, the data stored in the memory 530 may include data recently written into the database. Optionally, when an amount of data in the memory 530 reaches a specific threshold, the processor 510 may store the data in the memory 530 in the external memory 540, to perform persistent storage. When the data in the database needs to be read, data read from the external memory 540 may be first stored in the memory 530, in other words, the data stored in the memory 530 may further include the data read from the external memory 540.

The external memory 540 may also be referred to as a secondary memory, and the external memory 540 may be a non-volatile memory (non-volatile memory), for example, a read-only memory (read-only memory, ROM), a magnetic disk, or a hard disk drive (hard disk drive). The external memory 540 may be configured to persistently store data.

When the memory 530 stores the data in the database, formats (also referred to as storage manners) of the data in the database stored in the memory 530 and the data in the database stored in the external memory 540 may be the same, or may be different. For example, the data in the database stored in the memory 530 and the external memory 540 may both be in a row format or in a column format. The row format is a format (also referred to as a storage manner) in which a row is used as a reference, and the column format is a format (also referred to as a storage manner) in which a column is used as a reference. For another example, the data in the database stored in the memory 530 is in the row format, and the data in the database stored in the external memory 540 is in the column format. For another example, the data in the database stored in the memory 530 is in the column format, and the data in the database stored in the external memory 540 is in the row format.

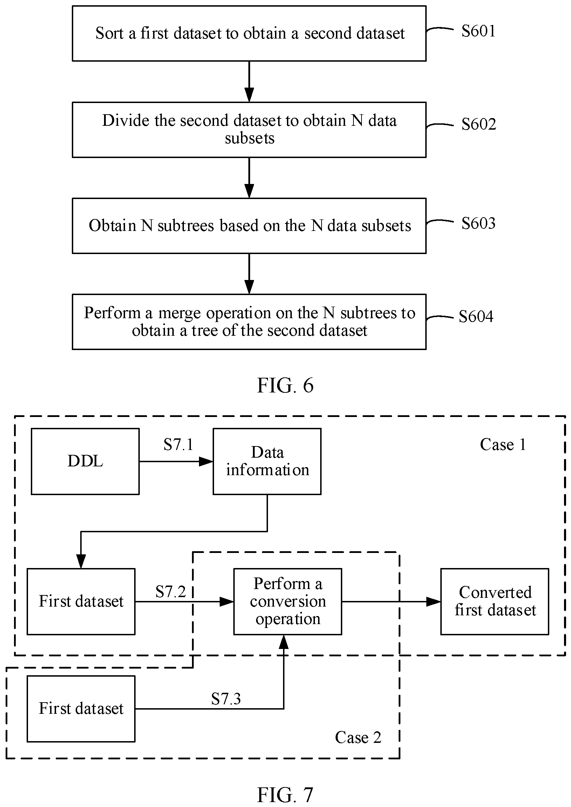

FIG. 6 is a schematic flowchart of a data processing method according to an embodiment of this application. The data processing method shown in FIG. 6 may be performed by an acceleration apparatus. The acceleration apparatus in the embodiment shown in FIG. 6 may be, for example, the acceleration apparatus 520 in FIG. 5. For example, the acceleration apparatus in the embodiment shown in FIG. 6 may be disposed in the computing device 120 in FIG. 1, the computing device 221 in FIG. 2, the primary node 310 in FIG. 3, the secondary node 320 in FIG. 3, the first node 410 in FIG. 4, the second node 420 in FIG. 4, or the third node 430 in FIG. 4. As shown in FIG. 6, the data processing method includes the following steps.

S601: The acceleration apparatus sorts a first dataset to obtain a second dataset.

For example, the acceleration apparatus receives a first request from a processor, where the first request is used to request to process the first dataset. The first request may be an example of the foregoing data processing request. The acceleration apparatus receives the first request, to determine to process the first dataset.

The first dataset includes a plurality of pieces of data, and the first dataset may be a part or all of data in a database of a computing device. The acceleration apparatus may perform a read operation, a write operation, or the like on the database in the computing device. The computing device is, for example, the computing device 120 in FIG. 1, the computing device 221 in FIG. 2, the primary node 310 in FIG. 3, the secondary node 320 in FIG. 3, the first node 410 in FIG. 4, the second node 420 in FIG. 4, or the third node 430 in FIG. 4. A format of the first dataset may be a row format and/or a column format. For meanings of the row format and the column format, refer to the foregoing descriptions. The data in the first dataset may be of any type, for example, a character type or an integer type.

For example, the first request includes the first dataset. In this way, the acceleration apparatus obtains the first dataset after receiving the first request. Alternatively, the first request includes a first address, and the first address is an address for storing the first dataset. In this way, after obtaining the first request, the acceleration apparatus may obtain the first dataset based on the first address.

For example, the first dataset is all of the data in the database, the first request includes an address (that is, the first address) of the database, and the acceleration apparatus obtains the first dataset based on the first address.

Table 1 is an example of the first dataset according to an embodiment of this application.

**Table 1**

| Student name | Score |
|---|---|
| Zhang San | 89 |
| Li Si | 90 |
| Wang Wu | 80 |

The format of the first dataset shown in Table 1 is the row format.

Optionally, the data in the first dataset may be of any type. For example, the data included in the first dataset may be of one or more of an integer type, a character type, a time type, or a date type.

In an example, the acceleration apparatus may process data of a plurality of data types. For example, the acceleration apparatus may support processing of data of one or more of an integer type, a character type, a time type, or a date type. Correspondingly, the acceleration apparatus may support execution of the write operation and/or the read operation on a plurality of types of databases. For example, the acceleration apparatus supports execution of the write operation and/or the read operation on PostgreSQL or MySQL. The PostgreSQL and the MySQL are two types of databases.

Table 2 is an example of a data type supported by the acceleration apparatus and a database type corresponding to the supported data type according to an embodiment of this application.

**Table 2**

| Data type | Database type | Description |
|---|---|---|
| smallint | PostgreSQL and MySQL | smallint represents a 16-bit integer type |
| integer (int) | PostgreSQL and MySQL | int/integer represents a 32-bit integer type |
| bigint | PostgreSQL and MySQL | bigint represents a 64-bit integer type |
| numeric/decimal | PostgreSQL and MySQL | numeric/decimal represents variable-length precision |
| varchar | PostgreSQL and MySQL | varchar represents a variable-length character type |
| char (n) | PostgreSQL and MySQL | char (n) represents a fixed-length character type |
| Text (text) | PostgreSQL and MySQL | Text |
| Date (date) | PostgreSQL and MySQL | Date |
| Time (time) | PostgreSQL and MySQL | Time |
| Time with a time zone (time with time zone) | PostgreSQL | Time with a time zone |
| Timestamp (timestamp) | PostgreSQL and MySQL | Date and time |
| Timestamp with a time zone (timestamp with time zone) | PostgreSQL | Date and time with a time zone |

In an example, the format of the first dataset may not meet a processing requirement of the acceleration apparatus, and/or a type of the first dataset does not meet a requirement of the acceleration apparatus. Therefore, after obtaining the first dataset, the acceleration apparatus may perform a conversion operation on the first dataset, to obtain a converted first dataset. The conversion operation includes a format conversion operation and/or a type conversion operation. The format conversion operation refers to converting data in one format into data in another format, and the type conversion operation refers to converting data of one type into data of another type.

The following describes a case in which the acceleration apparatus performs the conversion operation on the first dataset.

Case 1: The acceleration apparatus determines information about the first dataset, and performs, based on the information about the first dataset, the conversion operation on the first dataset obtained from the database. The information about the first dataset includes information about the format and/or the type of the first dataset. Case 1 is applicable to a case in which the acceleration apparatus has not processed the data in the database before. For example, Case 1 is applicable to a case in which the acceleration apparatus obtains the first dataset from the database by using a copy (copy) command.

FIG. 7 is a diagram of a principle of performing the conversion operation on the first dataset according to an embodiment of this application.

S7.1: The acceleration apparatus parses a data definition language (data definition language, DDL) of the database to obtain the information about the first dataset.

S7.2: The acceleration apparatus performs the conversion operation on the first dataset based on the information about the first dataset, to obtain the converted first dataset. For content of the conversion operation, refer to the foregoing content.

Case 2: The acceleration apparatus directly performs the conversion operation on the first dataset. Case 2 is applicable to a case in which the acceleration apparatus has processed the data in the database before. For example, Case 2 is applicable to a case in which the acceleration apparatus obtains the first dataset from the database by using an insert (insert) command.

Specifically, the acceleration apparatus has processed the data in the database (where for ease of differentiation, the data that has been processed by the acceleration apparatus before is referred to as historical data), and then the acceleration apparatus needs to process the first dataset in the database. In this case, it is equivalent to a case in which the acceleration apparatus has obtained information about the historical data, in other words, it is equivalent to a case in which the acceleration apparatus has obtained the information about the first dataset. Therefore, the acceleration apparatus may directly perform S7.3, to be specific, the acceleration apparatus directly performs the conversion operation on the first dataset. In this way, the acceleration apparatus does not need to obtain the information about the first dataset. This helps reduce a processing amount of the acceleration apparatus.

In another example, if the format and/or the type of the first dataset meet/meets the processing requirement of the acceleration apparatus, the acceleration apparatus may not need to perform the conversion operation on the first dataset.

When the acceleration apparatus performs the conversion operation on the first dataset, the acceleration apparatus may perform a sorting operation on the converted first dataset to obtain the second dataset. Alternatively, when the acceleration apparatus does not need to perform the conversion operation on the first dataset, the acceleration apparatus may perform a sorting operation on the first dataset to obtain the second dataset. A manner in which the acceleration apparatus performs the sorting operation on the converted first dataset or the first dataset is the same. The following uses an example in which the acceleration apparatus performs the sorting operation on the first dataset for description.

For example, the acceleration apparatus compares a plurality of pieces of sorted data in the first dataset with to-be-sorted data in the first dataset, and inserts the unsorted data into the sorted data, until the acceleration apparatus sorts all of the data in the first dataset, to obtain the second dataset. Optionally, the acceleration apparatus may synchronously compare the plurality of pieces of sorted data with the to-be-sorted data in the first dataset.

Specifically, the acceleration apparatus sorts a part of the data in the first dataset, to obtain a first data group. The part of data in the first dataset is a plurality of pieces of data in the first dataset, and the part of data may be, for example, two pieces of data included in the first dataset. The first data group may be considered as the plurality of pieces of sorted data. A data group in this embodiment of this application may be understood as an arrangement result of a plurality of pieces of data in a specific order, and a data group may alternatively be considered as a vector.

The acceleration apparatus determines a second data group, where each element in the second data group is target data. The target data is data other than the part of the data in the first dataset. The target data is considered as the to-be-sorted data in the first dataset. The acceleration apparatus compares data at each location (referred to as a first location for ease of differentiation) in the first data group with data corresponding to the first location in the second data group. This is equivalent to performing vectorized comparison between the first data group and the second data group, to determine a location into which the target data is inserted in the first data group, that is, a target location. The acceleration apparatus inserts the target data into the target location, to obtain the second dataset.

That the acceleration apparatus compares data at each location (referred to as a first location for ease of differentiation) in the first data group with data corresponding to the first location in the second data group may be specifically understood as that the acceleration apparatus compares data at a 1^{st} location in the first data group with data at a 1^{st} location in the second data group, compares data at a 2^{nd} location in the first data group with data at a 2^{nd} location in the second data group, and the rest may be deduced by analogy.

The foregoing descriptions are provided by using one piece of to-be-sorted target data as an example. When there are a plurality of pieces of to-be-sorted target data, the acceleration apparatus may separately determine a plurality of second data groups based on the plurality of pieces of target data, where an element included in each second data group is one of the plurality of pieces of target data. The acceleration apparatus may determine a target location corresponding to target data in each of the plurality of second data groups. For a manner in which the acceleration apparatus determines a target location, refer to the foregoing content. Details are not described herein again. The acceleration apparatus separately inserts the plurality of pieces of target data into corresponding target locations in the first data group, to obtain the second dataset.

For example, the acceleration apparatus may determine a second data group and a first data group based on one of the plurality of pieces of target data. The acceleration apparatus compares data at each first location in the first data group with data at the first location in the second data group, to determine a target location corresponding to the target data. After inserting the target data into the target location, the acceleration apparatus obtains an updated first data group. The acceleration apparatus may determine a second data group corresponding to another piece of target data in the plurality of pieces of target data, and determine a target location corresponding to the another piece of target data. The acceleration apparatus inserts the another piece of target data into the updated first data group, and the rest may be deduced by analogy, until the acceleration apparatus completes processing the plurality of pieces of target data and obtains a finally updated first data group, where the finally updated first data group is the second dataset.

Optionally, the acceleration apparatus may compare the first data group with the second data group according to a first rule. The first rule is, for example, to sort data in descending order, or to sort data in descending order. The first rule may be preconfigured in the acceleration apparatus, or may be determined by the acceleration apparatus. For example, the first request indicates the first rule, and the acceleration apparatus obtains the first rule after receiving the first request. For example, the first request includes a comparison function, and the acceleration apparatus may determine the first rule based on the comparison function. The comparison function represents a function for sorting data.

Optionally, the acceleration apparatus includes a first register and a second register. The register may be configured to store a data group. Because the register is configured to store the data group, the register may also be referred to as a vector (or data group) register.

For example, in a process of performing the sorting operation on the first dataset, the acceleration apparatus may write the first data group into the first register, and write the second data group into the second register. The acceleration apparatus compares the data at each first location in the first data group with the data at the first location in the second data group via the first register and the second register.

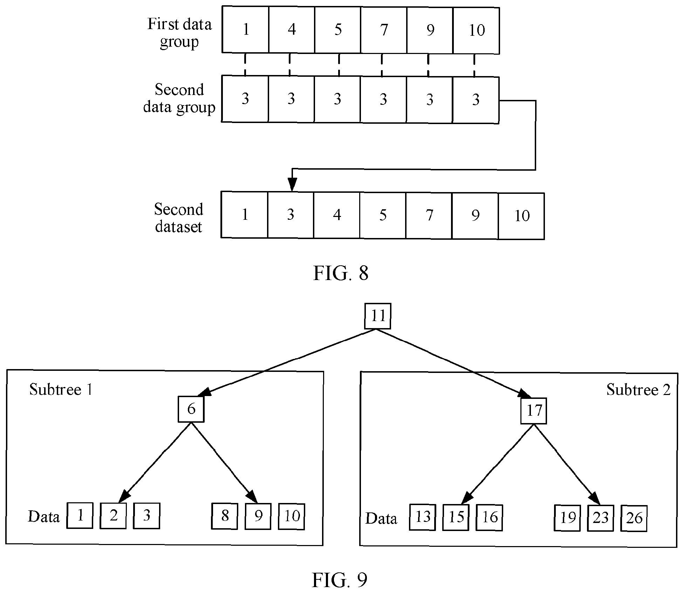

For example, FIG. 8 is a diagram of the second data group and the first data group according to an embodiment of this application. In FIG. 8, an example in which the first dataset includes 1, 4, 5, 4, 7, 9, 3, and 10 is used. As shown in FIG. 8, the first data group determined by the acceleration apparatus is specifically 1, 4, 5, 7, 9, and 10, and the second data group determined by the acceleration apparatus is specifically 3, 3, 3, 3, 3, and 3, that is, the target data is 3.

The acceleration apparatus may compare the data at each first location in the first data group with the data at the first location in the second data group. In FIG. 8, a dashed line is used to represent comparison. Specifically, the acceleration apparatus compares data (that is, 1) at a 1^{st} location in the first data group with data (that is, 3) at a 1^{st} location in the second data group, compares data (that is, 4) at a 2^{nd} location in the first data group with data (that is, 3) at a 2^{nd} location in the second data group, compares data (that is, 5) at a 3^{rd} location in the first data group with data (that is, 3) at a 3^{rd} location in the second data group, compares data (that is, 7) at a 4^{th} location in the first data group with data (that is, 3) at a 4^{th} location in the second data group, compares data (that is, 9) at a 5^{th} location in the first data group with data (that is, 3) at a 5^{th} location in the second data group, and compares data (that is, 10) at a 6^{th} location in the first data group with data (that is, 3) at a 6^{th} location in the second data group. In other words, it is equivalent to a case in which the acceleration apparatus compares the to-be-sorted data in the first dataset with the plurality of pieces of sorted data in parallel, to determine the target location, that is, the 2^{nd} location in the first data group. The acceleration apparatus may insert the target data into the 2^{nd} location in the first data group, to obtain the second dataset, to be specific, the second dataset is specifically 1, 3, 4, 5, 7, 9, and 10.

S602: The acceleration apparatus divides the second dataset to obtain N data subsets. N is an integer greater than or equal to 2. Each of the N data subsets includes a plurality of pieces of consecutively arranged data in the second dataset.

Division may be understood as grouping, or may be understood as sequentially dividing the second dataset into a plurality of data subsets. Any two of the N data subsets do not overlap. In other words, any two of the N data subsets do not include a same piece of data. Optionally, any two of the N data subsets include a same amount of data.

For example, the second dataset is specifically 1, 3, 4, 5, 7, 9, 10, 13, 14, 20, 24, 25, 27, 29, 30, 33, 34, and 37. The acceleration apparatus may divide the second dataset into two data subsets. One data subset is specifically 1, 3, 4, 5, 7, 9, 10, 13, and 14, and the other data subset is specifically 20, 24, 25, 27, 29, 30, 33, 34, and 37.

For example, the acceleration apparatus may divide the second dataset based on a preset quantity, to obtain the N data subsets. The preset quantity is an amount of data included in each data subset. The preset quantity may be pre-stored in the acceleration apparatus, or may be determined by the acceleration apparatus based on a total amount of data included in the second dataset.

S603: The acceleration apparatus obtains N subtrees based on the N data subsets.

For example, the acceleration apparatus may process the N data subsets in parallel to obtain the N subtrees. The subtree may be referred to as a subtree index, and may be understood as a data index structure of the data subset. Each subtree corresponds to one data subset, and a subtree corresponding to one data subset is used to search for data in the data subset.

A manner in which the acceleration apparatus determines each of the N subtrees is the same. The following uses an example in which the acceleration apparatus determines one of the N subtrees for description.

The acceleration apparatus may be preconfigured with a level of a tree, or a user sets a level of a tree in the acceleration apparatus. The acceleration apparatus determines the level of the tree, and this is equivalent to obtaining a level of a subtree, where the level of the subtree is, for example, the level of the tree minus 1. The acceleration apparatus may determine a subtree based on a data subset and the level of the subtree.

For example, the acceleration apparatus uses each piece of data included in the data subset as one leaf node, and may obtain a plurality of leaf nodes. The acceleration apparatus determines values of upper-layer nodes of the plurality of leaf nodes, and the rest may be deduced by analogy, to obtain a subtree that meets the level of the subtree.

Optionally, the acceleration apparatus may determine the values of the upper-layer nodes of the plurality of leaf nodes according to a second rule. For example, the second rule is that a value of a leaf node in a first direction (for example, a left side) of the upper-layer node is less than the value of the upper-layer node, and a value of a leaf node in a second direction (for example, a right side) of the upper-layer node is greater than the value of the upper-layer node.

For example, FIG. 9 is a diagram of a process of creating a tree according to an embodiment of this application. In FIG. 9, an example in which a first data subset corresponding to the second dataset includes 1, 2, 3, 8, 9, and 10, a second data subset includes 13, 15, 16, 19, 23, and 26, and the level of the subtree is 2 is used for description.

As shown in FIG. 9, the acceleration apparatus uses each piece of data in the first data subset as a leaf node, and determines that a value of an upper-layer node of the leaf node corresponding to the first data subset is 6, to obtain a subtree 1. Similarly, the acceleration apparatus also uses each piece of data in the second data subset as a leaf node, and determines that a value of an upper-layer node of the leaf node corresponding to the first data subset is 17, to obtain a subtree 2.

S604: The acceleration apparatus performs a merge operation on the N subtrees to obtain a tree of the second dataset.

The tree may also be referred to as a tree-like index, and may be understood as an index structure of the second dataset. The tree is used to search for the data in the second dataset.

The acceleration apparatus may perform, in a first order of the N data subsets, the merge operation on the N subtrees corresponding to the N data subsets, to obtain the tree of the second dataset. Any one of the N subtrees may be understood as a part of the tree (which may also be referred to as the tree-like index). The merge operation may be understood as sequentially connecting the N subtrees in the first order, and determining a value of a root node of the N subtrees, to obtain the tree. The tree includes the root node and the N subtrees. Optionally, the acceleration apparatus may determine the value of the root node according to the second rule. For content of the second rule, refer to the foregoing descriptions.

Still refer to FIG. 9, the acceleration apparatus may merge the subtree 1 and the subtree 2, and determine that a value of a root node of the two subtrees is 11, to obtain the tree shown in FIG. 9.

In a possible implementation, the acceleration apparatus may include a plurality of index modules and a calculation module. Each index module and the calculation module may be implemented by using hardware or software. Each index module may include a control submodule and an operation submodule, and the calculation module may also include a control submodule and an operation submodule. Each of the plurality of index modules may be configured to create one of the N subtrees. The calculation module may perform the merge operation on the N subtrees output by the plurality of index modules, to obtain the tree. In this implementation, the acceleration apparatus may create a plurality of subtrees in parallel by using the plurality of index modules, to improve efficiency of creating the tree by the acceleration apparatus.

A process in which the acceleration apparatus performs S602 to S604 on the second dataset may be considered as that the acceleration apparatus performs a tree creation operation on the second dataset.

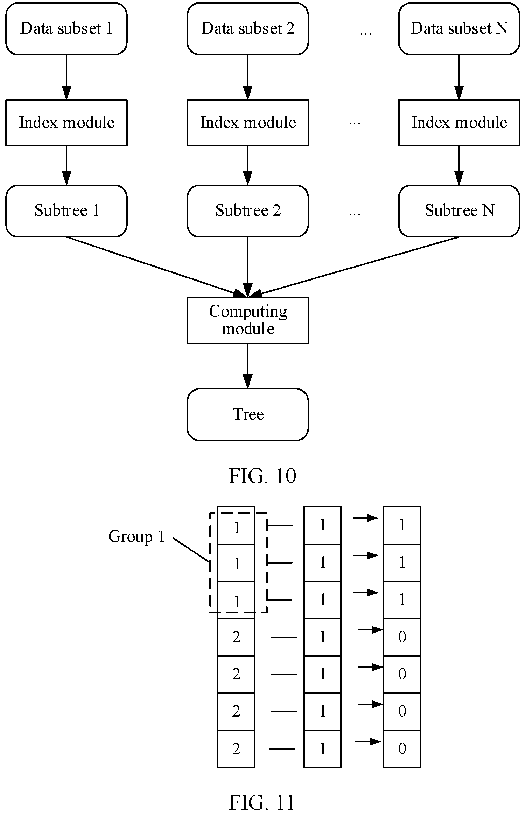

FIG. 10 is a diagram of a principle of creating a tree according to an embodiment of this application. As shown in FIG. 10, the acceleration apparatus includes a plurality of index modules. Each of the plurality of index modules may obtain one subtree based on one of the N data subsets. The plurality of index modules may correspondingly output N subtrees (including a subtree 1, a subtree 2, and a subtree N in FIG. 10). The calculation module performs the merge operation on the N subtrees to obtain the tree of the second dataset.

In this embodiment of this application, in a process in which the acceleration apparatus determines the tree of the second dataset, the acceleration apparatus or the processor does not need to generate an instruction, a decoding instruction, or the like. This helps simplify a data processing process and improve data processing efficiency of the acceleration apparatus. In addition, the acceleration apparatus may create a plurality of subtrees in parallel, and this also helps improve efficiency of creating the tree of the second dataset, in other words, improve the data processing efficiency. In addition, an embodiment of this application further provides a method for sorting the first dataset. In a process of sorting the first dataset, the acceleration apparatus may compare a plurality of pieces of data in the first data group with a plurality of pieces of target data in the second data group in parallel, to help quickly determine a location of the target data in the first data group, improve efficiency of sorting the first dataset, and improve the data processing efficiency.

In a possible implementation, the acceleration apparatus may further perform a grouping operation on the second dataset. The following describes a manner in which the acceleration apparatus performs the grouping operation.

The acceleration apparatus may compare the plurality of pieces of data in the second dataset with a grouping key of a target group, to determine at least one piece of data that matches a target key. The acceleration apparatus determines the at least one piece of data as the target group. The grouping key may be determined by the acceleration apparatus, or may be determined by the acceleration apparatus based on the first request. For example, the first request includes the grouping key, and the acceleration apparatus receives the first request. This is equivalent to obtaining the grouping key.

For example, the acceleration apparatus obtains a third data group based on the target key of the target group. The third data group and the second dataset include a same amount of data, and each element in the third data group is the target key. The acceleration apparatus may compare data at each location (referred to as a second location for ease of differentiation) in the second dataset with data at a location corresponding to the second location in the third data group, to determine the at least one piece of data that matches the target key, and divide the at least one piece of data into the target group. In other words, data included in the target group is the at least one piece of data.

The data that matches the target key may be data whose index is the same as an index of the target key, may be data whose index is less than or equal to an index of the target key, or may be data whose index is the same as an index of the target key, or whose index is less than or equal to an index of the target key.

Optionally, the acceleration apparatus may include a third register and a fourth register. The acceleration apparatus may write the second dataset into the third register, write the third data group into the fourth register, and compare the second dataset with the third data group via the third register and the fourth register. For an implementation of the register, refer to the foregoing content.

For example, FIG. 11 is a diagram of a process of grouping data according to an embodiment of this application. As shown in FIG. 11, the second dataset includes 1, 1, 1, 2, 2, 2, and 2, and the target key is 1. The acceleration apparatus determines that the third data group is specifically 1, 1, 1, 1, 1, 1, and 1 based on the target key.

The acceleration apparatus may compare data at each second location in the first dataset with the data at the second location in the third data group, to determine the at least one piece of data that matches the target key.

Specifically, the acceleration apparatus compares data (that is, 1) at a 1^{st} location with data (that is, 1) at a 1^{st} location in the third data group, compares data (that is, 1) at a 2^{nd} location in the first dataset with data (that is, 1) at a 2^{nd} location in the third data group, compares data (that is, 1) at a 3^{rd} location in the first dataset with data (that is, 1) at a 3^{rd} location in the third data group, compares data (that is, 2) at a 4^{th} location in the first dataset with data (that is, 1) at a 4^{th} location in the third data group, compares data (that is, 2) at a 5^{th} location in the first dataset with data (that is, 1) at a 5^{th} location in the third data group, compares data (that is, 2) at a 6^{th} location in the first dataset with data (that is, 1) at a 6^{th} location in the third data group, and compares the data (that is, 2) at a 7^{th} location in the first dataset with data (that is, 1) at a 7^{th} location in the third data group, to determine that the data at the 1^{st} location, the data at the 2^{nd} location, and the data at the 3^{rd} location in the first dataset match the target key. Therefore, the acceleration apparatus determines the data at the 1^{st} location, the data at the 2^{nd} location, and the data at the 3^{rd} location in the first dataset as the target group.

After obtaining the target group, the acceleration apparatus may write information about the target group and the target group into an external memory. For content of the external memory, refer to the foregoing descriptions. The information about the target group includes the target key.

Optionally, the information about the target group further includes one or more of an amount (count) of data (that is, the at least one piece of data) included in the target group, a maximum value (max) of the data (that is, the at least one piece of data) included in the target group, a minimum value (min) of the data (that is, the at least one piece of data) included in the target group, or a summation result (sum) of the data (that is, the at least one piece of data) included in the target group.

Optionally, the acceleration apparatus may determine a plurality of target groups based on a plurality of target keys. For a manner in which the acceleration apparatus determines each target group, refer to the foregoing content.

When the acceleration apparatus determines the plurality of target groups, the acceleration apparatus may store the information about the plurality of target groups in a form of a page (page). Information about one target group and the target group may be correspondingly stored in one or more pages.

Optionally, in addition to storing the information about the target group and the target group, one page further includes information about the page. The information about the page includes an identifier of the page.

The information about the page further includes one or more of a page header (page header) of the page, an identifier of a table to which the target group belongs, a quantity of pages used to store the target group corresponding to the page, an index of the page, a total quantity of target groups, a quantity of target groups included in the page, and a quantity of grouping keys included in the page.

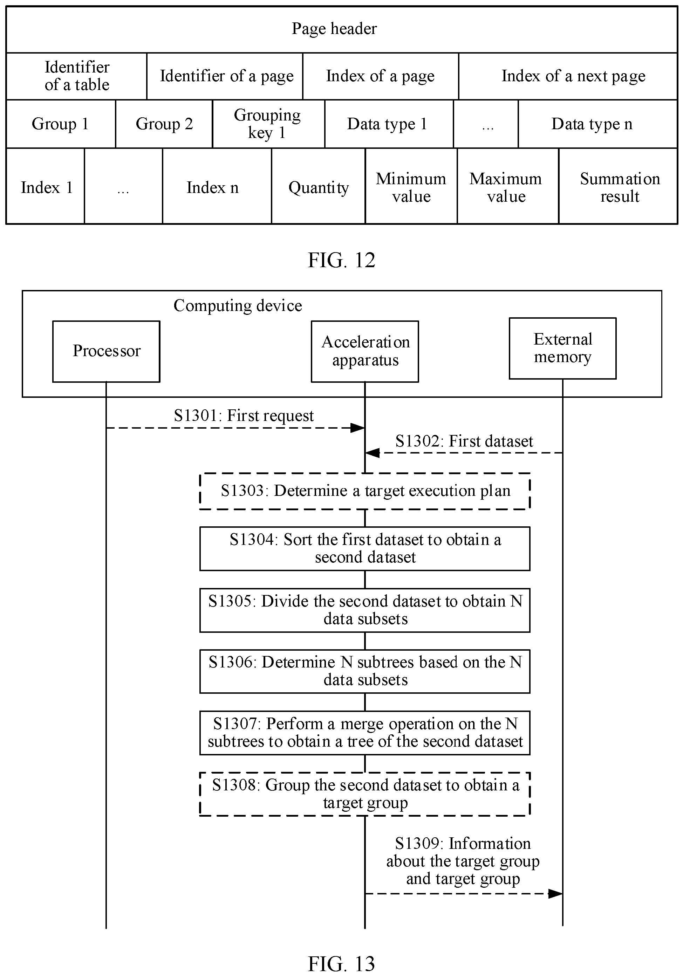

For example, FIG. 12 is a diagram of a structure of a page according to an embodiment of this application. As shown in FIG. 12, the page includes information about the page and information about a target group included in the page. As shown in FIG. 12, the information about the page includes an identifier of the page, an index of the page, and an index of a next page. The information about the target group includes an identifier of the group (for example, a group 1 or a group 2), an index 1 to an index n, an amount of data included in the group, a maximum value, a minimum value, a summation result in the group, and the like.

In a possible implementation, the acceleration apparatus may update the data. For example, the acceleration apparatus may perform an update operation, an insertion operation, or a deletion operation on the second dataset. In this case, the acceleration apparatus may update the second dataset, and may further update the information about the target group corresponding to the second dataset. For example, the acceleration apparatus may update, based on a grouping key corresponding to updated data, information about a group corresponding to the grouping key, and update information about a page in which the group is located.

FIG. 13 is a schematic flowchart of a data processing method according to an embodiment of this application. The data processing method in the embodiment shown in FIG. 13 is, for example, applied to the application scenario shown in FIG. 1. A computing device in the embodiment shown in FIG. 13 is, for example, the computing device 120 in FIG. 1, the computing device 221 in FIG. 2, the primary node 310 in FIG. 3, the secondary node 320 in FIG. 3, the first node 410 in FIG. 4, the second node 420 in FIG. 4, or the third node 430 in FIG. 4. A diagram of a structure of the computing device in the embodiment shown in FIG. 13 is, for example, the diagram of the structure of the computing device shown in FIG. 5. A processor in the embodiment shown in FIG. 13 is, for example, the processor 510 shown in FIG. 5, and an acceleration apparatus in the embodiment shown in FIG. 13 is, for example, the acceleration apparatus 520 shown in FIG. 5. The data processing method shown in FIG. 13 includes the following processing steps.

S1301: The processor sends a first request to the acceleration apparatus. Correspondingly, the acceleration apparatus receives the first request from the processor.

For a meaning of the first request, refer to the foregoing descriptions. In this embodiment of this application, the first request includes a first address, and the address specifically indicates an address in an external memory. Optionally, the first request further includes a structured query language (structured query language, SQL) sentence.

S1302: The acceleration apparatus obtains a first dataset from the external memory.

The acceleration apparatus may obtain the first dataset based on the first address. For content of the first dataset, refer to the foregoing descriptions.

S1301 and S1302 are a manner in which the acceleration apparatus obtains the first dataset. If the acceleration apparatus obtains the first dataset in another manner, the acceleration apparatus may not need to perform steps S1301 and S1302, that is, S1301 and S1302 are optional steps.

S1303: The acceleration apparatus determines a target execution plan.

The acceleration apparatus may determine the target execution plan used to process the first dataset. The target execution plan includes an operation that needs to be performed by the acceleration apparatus on the first dataset, for example, one or more of a tree creation operation, a conversion operation, a sorting operation, or a grouping operation.

Optionally, the acceleration apparatus may determine, from a plurality of optimizers, a target optimizer that matches the first dataset, and receive the target execution plan from the target optimizer. The optimizer may also be referred to as a query optimizer, and is configured to determine the execution plan. The target optimizer may determine, based on the structured query language (structured query language, SQL) sentence in the first request, the target execution plan corresponding to the first dataset. In this manner, the processor does not need to determine the target execution plan, to help reduce a processing amount of the processor.

In this embodiment of this application, an example in which the target execution plan includes the sorting operation and the tree creation operation on the first dataset is used for description.

S1304: The acceleration apparatus sorts the first dataset to obtain a second dataset.

For content of sorting the first dataset by the acceleration apparatus, refer to the foregoing content. Details are not described herein again.

S1305: The acceleration apparatus divides the second dataset to obtain N data subsets.

For a manner in which the acceleration apparatus divides the second dataset and content of the data subset, refer to the foregoing content. Details are not described herein again.

S1306: The acceleration apparatus determines N subtrees based on the N data subsets.

For a manner in which the acceleration apparatus determines the N subtrees, refer to the foregoing content. Details are not described herein again.

S1307: The acceleration apparatus performs a merge operation on the N subtrees to obtain a tree of the second dataset.

For specific content of performing the merge operation on the N subtrees by the acceleration apparatus, refer to the foregoing content. Details are not described herein again.

S1308: The acceleration apparatus groups the second dataset to obtain a target group.

For a specific process of obtaining the target group and grouping, refer to the foregoing content. Details are not described herein again.

S1309: The acceleration apparatus writes information about the target group and the target group into the external memory. The external memory is, for example, the external memory 540 shown in FIG. 5.

For content of the information about the target group, refer to the foregoing content.

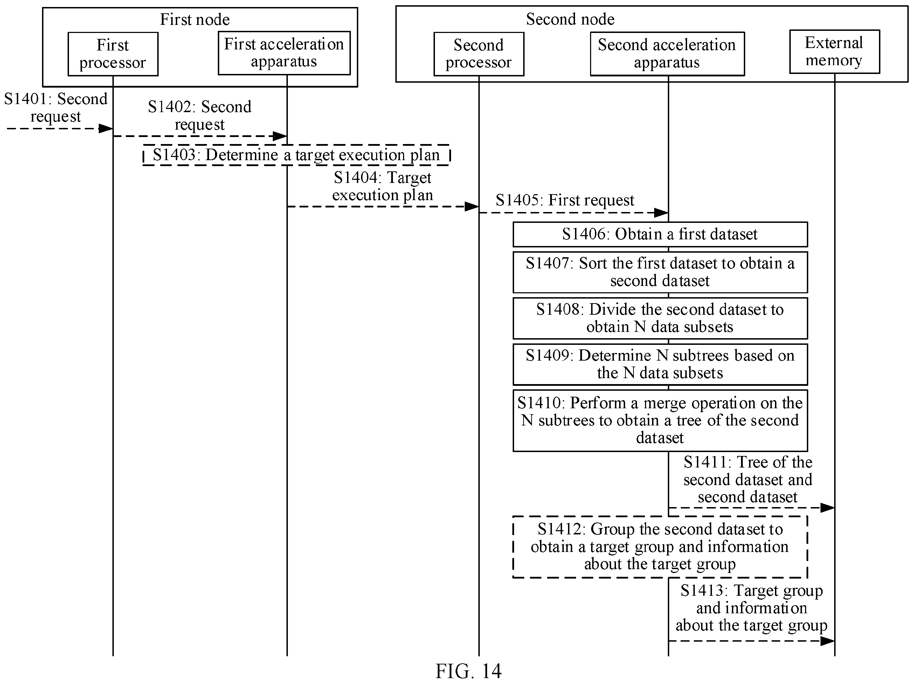

FIG. 14 is a schematic flowchart of a data processing method according to an embodiment of this application. The data processing method in the embodiment shown in FIG. 14 is, for example, applied to the application scenario shown in any one of FIG. 2 to FIG. 5. A first node and a second node in the embodiment shown in FIG. 14 are, for example, the two computing devices 221 in FIG. 2, or the first node in the embodiment shown in FIG. 14 is, for example, the primary node 310 in FIG. 3, and the second node is, for example, the secondary node 320 in FIG. 3, or the first node in the embodiment shown in FIG. 14 is, for example, the first node 410 in FIG. 4, and the second node is, for example, the second node 420 or the third node 430 in FIG. 4. In the embodiment shown in FIG. 14, an example in which the first node includes a first processor and a first acceleration apparatus, and the second node includes a second processor, a second acceleration apparatus, and an external memory is used. The first acceleration apparatus or the second acceleration apparatus in the embodiment shown in FIG. 14 is, for example, the acceleration apparatus 520 shown in FIG. 5. The data processing method shown in FIG. 14 includes the following processing steps.

S1401: The first processor receives a second request. The second request is used to request to process a first dataset.

The first processor may receive the second request from a client. The client is, for example, the client 111 in FIG. 1, or the client 211 in FIG. 2.

S1402: The first processor sends the second request to the first acceleration apparatus. Correspondingly, the first acceleration apparatus receives the second request from the first processor.

S1403: The first acceleration apparatus determines a target execution plan.

For content of determining the target execution plan by the first acceleration apparatus, refer to the foregoing content.

S1404: The first acceleration apparatus sends the target execution plan to the second processor. Correspondingly, the second processor receives the target execution plan from the first acceleration apparatus.

S1405: The second processor sends a first request to the second acceleration apparatus. Correspondingly, the second acceleration apparatus receives the first request from the second processor.

Optionally, the first request includes the target execution plan.

S1401 to S1405 are a manner in which the second acceleration apparatus obtains the first dataset. When the second acceleration apparatus determines the first dataset in another manner, S1401 to S1405 do not need to be performed, that is, S1401 to S1405 are optional steps.

S1406: The second acceleration apparatus obtains the first dataset.

For example, the second acceleration apparatus obtains the first dataset based on the first request.

S1407: The second acceleration apparatus sorts the first dataset to obtain a second dataset.

For content of sorting the first dataset, refer to the foregoing content. Details are not described herein again.

In a possible implementation, the second acceleration apparatus performs a conversion operation on the first dataset to obtain a converted first dataset. For content of the conversion operation, refer to the foregoing descriptions. Details are not described herein again.

S1408: The second acceleration apparatus divides the second dataset to obtain N data subsets.

For a manner in which the second acceleration apparatus obtains the N data subsets, refer to the foregoing content. Details are not described herein again.

S1409: The second acceleration apparatus determines N subtrees based on the N data subsets.

For content of determining the N subtrees by the second acceleration apparatus, refer to the foregoing content.

S1410: The second acceleration apparatus performs a merge operation on the N subtrees to obtain a tree of the second dataset.

For a meaning of the tree and content of performing the merge operation on the N subtrees by the second acceleration apparatus, refer to the foregoing descriptions.

S1411: The second acceleration apparatus writes the tree of the second dataset and the second dataset into the external memory.

S1412: The second acceleration apparatus groups the second dataset to obtain a target group and information about the target group.

For the target group and the information about the target group, refer to the foregoing content.

S1413: The second acceleration apparatus writes the target group and the information about the target group into the external memory.

In an example, S1411 to S1413 are optional steps, and are shown by using dashed lines in FIG. 14.

In this embodiment of this application, the first acceleration apparatus may determine the target execution plan, and the first processor does not need to determine the target execution plan. This helps reduce a processing amount of the first processor. In addition, the second acceleration apparatus may perform one or more of a sorting operation, a conversion operation, a grouping operation, and a tree creation operation on the first dataset, and the first processor does not need to decode or deliver an instruction in an execution process, to help simplify a data processing process and improve data processing efficiency.

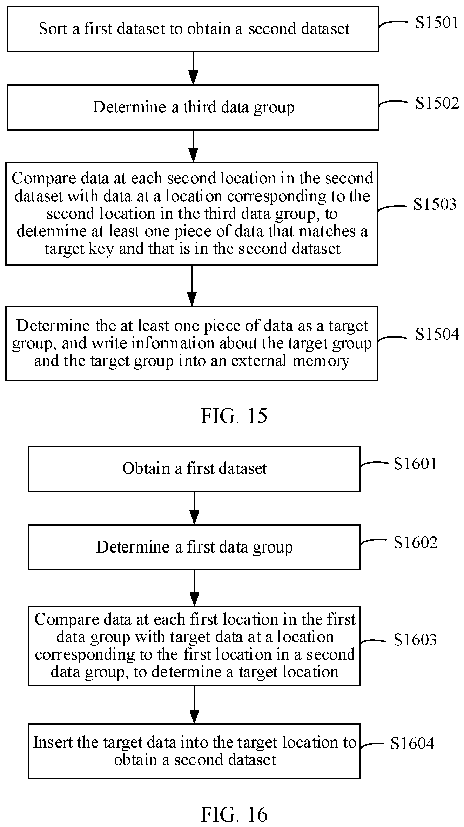

An embodiment of this application further provides a data processing method. FIG. 15 is a schematic flowchart of the method. The method shown in FIG. 15 may be performed by an acceleration apparatus, and the acceleration apparatus may be, for example, the acceleration apparatus 520 in FIG. 5. For example, the acceleration apparatus in the embodiment shown in FIG. 15 may be disposed in the computing device 120 in FIG. 1, the computing device 221 in FIG. 2, the primary node 310 in FIG. 3, the secondary node 320 in FIG. 3, the first node 410 in FIG. 4, the second node 420 in FIG. 4, or the third node 430 in FIG. 4. The data processing method shown in FIG. 15 includes the following processing steps.

S1501: The acceleration apparatus sorts the first dataset to obtain a second dataset.

For a manner in which the acceleration apparatus determines the second dataset, refer to the foregoing content.

S1502: The acceleration apparatus determines a third data group.

For content of the third data group and content of determining the third data group by the acceleration apparatus, refer to the foregoing content.

S1503: The acceleration apparatus compares data at each second location in the second dataset with data at a location corresponding to the second location in the third data group, to determine at least one piece of data that matches a target key and that is in the second dataset.

For a manner in which the acceleration apparatus determines the at least one piece of data that matches the target key, refer to the foregoing content.

S1504: Determine the at least one piece of data as a target group, and write information about the target group and the target group into an external memory.

For content of the information about the target group, refer to the foregoing content.

In this embodiment of this application, the acceleration apparatus may compare a plurality of pieces of data in the third data group with a plurality of pieces of data in the second dataset in parallel, to improve efficiency of grouping the second dataset by the acceleration apparatus. In addition, the acceleration apparatus or the processor does not need to decode or deliver an instruction or the like, and this also helps improve efficiency of performing a grouping operation by the acceleration apparatus.

In a possible implementation, the acceleration apparatus may perform a tree creation operation and/or a conversion operation on the first dataset. For content of performing the tree creation operation and the conversion operation, refer to the foregoing content. Details are not described herein again.

An embodiment of this application further provides a data processing method. FIG. 16 is a schematic flowchart of the method. The method shown in FIG. 16 may be performed by an acceleration apparatus, and the acceleration apparatus may be, for example, the acceleration apparatus 520 in FIG. 5. For example, the acceleration apparatus in the embodiment shown in FIG. 16 may be disposed in the computing device 120 in FIG. 1, the computing device 221 in FIG. 2, the primary node 310 in FIG. 3, the secondary node 320 in FIG. 3, the first node 410 in FIG. 4, the second node 420 in FIG. 4, or the third node 430 in FIG. 4. The data processing method shown in FIG. 16 includes the following processing steps.

S1601: The acceleration apparatus obtains a first dataset.

For content of obtaining the first dataset by the acceleration apparatus, refer to the foregoing content.

S1602: The acceleration apparatus determines a first data group.

For content of the first data group and a manner of determining the first data group, refer to the foregoing content.

In a possible implementation, the acceleration apparatus may perform a conversion operation on the first dataset. For content of performing the conversion operation, refer to the foregoing content.

S1603: The acceleration apparatus compares data at each first location in the first data group with target data at a location corresponding to the first location in a second data group, to determine a target location.

For a manner in which the acceleration apparatus determines the target location, refer to the foregoing content.

S1604: The acceleration apparatus inserts the target data into the target location to obtain a second dataset.

For content of obtaining the second dataset by the acceleration apparatus, refer to the foregoing content.

In a possible implementation, the acceleration apparatus may perform a tree creation operation and/or a grouping operation on the first dataset. For content of performing the tree creation operation and the grouping operation, refer to the foregoing content. Details are not described herein again.

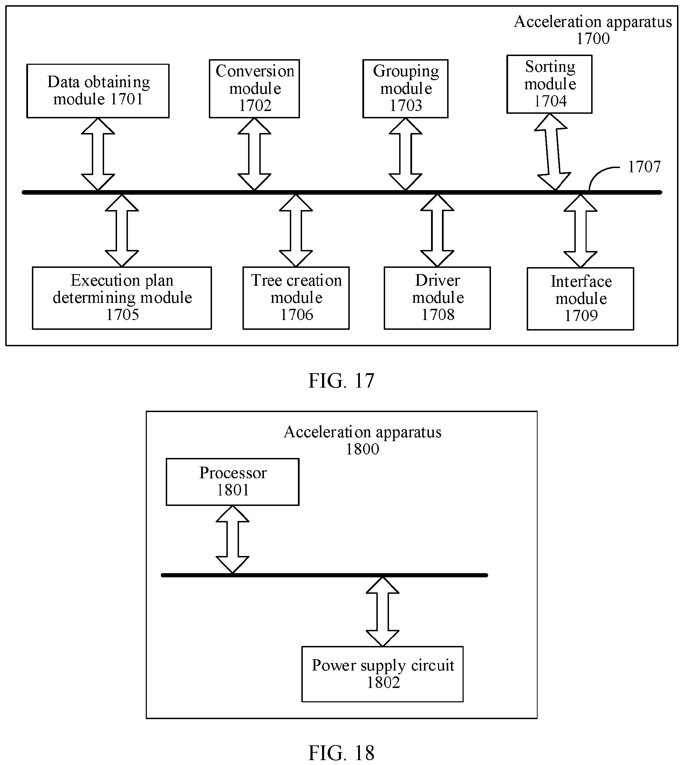

FIG. 17 is a diagram of a structure of an acceleration apparatus according to an embodiment of this application. As shown in FIG. 17, an acceleration apparatus 1700 includes a data obtaining module 1701, a grouping module 1703, a sorting module 1704, and a tree creation module 1706. Optionally, the acceleration apparatus 1700 further includes a conversion module 1702, an execution plan determining module 1705, a driver module 1708, and an interface module 1709. Any two modules in the acceleration apparatus 1700 may be connected via a communication bus 1707.

Optionally, a plurality of modules shown in FIG. 17 may be implemented by using software, or may be implemented by using hardware. This is not limited in this embodiment of this application.

In this embodiment of this application, the acceleration apparatus 1700 may be configured to implement any one of the foregoing data processing methods, for example, any one of the data processing methods in FIG. 6 and FIG. 13 to FIG. 16.

In a possible embodiment, the acceleration apparatus 1700 may be configured to implement the data processing methods shown in FIG. 6, FIG. 13, and FIG. 14.

For example, the acceleration apparatus 1700 may be configured to implement the data processing method shown in FIG. 6. Specifically, the sorting module 1704 is configured to perform S601, and the tree creation module 1706 is configured to perform steps S602 to S604.

For another example, the acceleration apparatus 1700 may be configured to implement any data processing method in FIG. 13. Specifically, the sorting module 1704 is configured to perform step S1304, and the tree creation module 1706 is configured to perform steps S1304 to S1307. Optionally, the data obtaining module 1701 is configured to perform steps S1301 and S1302, the execution plan determining module 1705 is configured to perform step S1303, and the grouping module 1703 is configured to perform step S1308.

For another example, the acceleration apparatus 1700 may be configured to implement any data processing method in FIG. 14. Specifically, the data obtaining module 1701 is configured to perform step S1406, the sorting module 1704 is configured to perform step S1407, and the tree creation module 1706 is configured to perform steps S1408 to S1410.

In a possible embodiment, the acceleration apparatus 1700 may be configured to implement any data processing method in FIG. 15. Specifically, the sorting module 1704 is configured to perform step S1501, and the grouping module 1703 is configured to perform steps S1502 to S1504.

In a possible embodiment, the acceleration apparatus 1700 may be configured to implement any data processing method in FIG. 16.

Specifically, the data obtaining module 1701 is configured to perform steps S1601, and the sorting module 1704 is configured to perform steps S1602 to S1604.

In a possible implementation, the acceleration apparatus 1700 may include a plurality of conversion modules 1702, and each conversion module 1702 is configured to convert data in a format into data in another format, and/or is configured to convert data of a data type into data of another data type. The acceleration apparatus 1700 may determine, from a plurality of conversion modules 1702 based on information about a first dataset, a conversion module 1702 configured to process the first dataset. In this implementation, the acceleration apparatus 1700 may process a plurality of pieces of data in parallel by using the plurality of conversion modules 1702, to help improve efficiency of format conversion performed by the acceleration apparatus 1700.

In a possible implementation, the acceleration apparatus 1700 may include a plurality of tree creation modules 1706, and each tree creation module 1706 may be configured to implement, for example, a function of the index module described above. For content of the index module, refer to the content in FIG. 10. The tree creation module 1706 may include a control submodule and an operation submodule. Each of the plurality of tree creation modules 1706 may be configured to create a subtree. In this implementation, the acceleration apparatus 1700 may create a plurality of subtrees in parallel by using the plurality of tree creation modules 1706, to improve efficiency of creating a tree by the acceleration apparatus 1700, and improve data processing efficiency.

Optionally, the acceleration apparatus 1700 may invoke a hardware resource of the acceleration apparatus 1700 by using the driver module 1708, and the interface module 1709 may be configured to communicate with an external device (for example, a processor).

FIG. 18 is a diagram of a structure of an acceleration apparatus according to an embodiment of this application. As shown in FIG. 18, the acceleration apparatus 1800 includes a processor 1801 and a power supply circuit 1802. The power supply circuit 1802 is configured to supply power to the processor 1801. The processor 1801 may implement any one of the foregoing data processing methods, for example, implement any one of the foregoing data processing methods in FIG. 6 and FIG. 13 to FIG. 16. Optionally, the acceleration apparatus 1800 may be configured to implement a function of the acceleration apparatus 1700 in FIG. 17.

Optionally, the acceleration apparatus 1800 further includes a register, and the register includes, for example, the first register, the second register, the third register, and the fourth register in the embodiment shown in FIG. 6.

An embodiment of this application provides a computing device. The computing device includes an acceleration apparatus and a processor. The processor may be configured to send a first request to the acceleration apparatus. For a meaning of the first request, refer to the foregoing descriptions. The acceleration apparatus obtains a first dataset based on the first request, and performs any one of the foregoing data processing methods on the first dataset, for example, implements any one of the data processing methods in FIG. 6 and FIG. 13 to FIG. 16. For specific implementations of the processor and the acceleration apparatus, refer to the foregoing content. Optionally, a structure of the acceleration apparatus may be, for example, the acceleration apparatus 1700 shown in FIG. 17 or the acceleration apparatus 1800 shown in FIG. 18.

An embodiment of this application provides a chip system. The chip system includes a processor and an interface. The processor is configured to invoke and run instructions from the interface. When executing the instructions, the processor implements any one of the foregoing data processing methods, for example, implements any one of the foregoing data processing methods in FIG. 6 and FIG. 13 to FIG. 16.

An embodiment of this application provides a computer-readable storage medium. The computer-readable storage medium is configured to store a computer program or instructions. When the computer program or the instructions are run, any one of the foregoing data processing methods is implemented, for example, any one of the foregoing data processing methods in FIG. 6 and FIG. 13 to FIG. 16 is implemented.

An embodiment of this application provides a computer program product including instructions. When the computer program product runs on a computer, any one of the foregoing data processing methods is implemented, for example, any one of the data processing methods in FIG. 6 and FIG. 13 to FIG. 16 is implemented.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes needs be determined based on functions and internal logic of the processes.

## Claims

1. A data processing method, applied to an acceleration apparatus, wherein the method comprises:
sorting a first dataset to obtain a second dataset, wherein the first dataset and the second dataset each comprise a plurality of pieces of data;
dividing the second dataset to obtain N data subsets, wherein each of the N data subsets comprises at least two pieces of consecutively arranged data in the second dataset, and N is an integer greater than or equal to 2;
determining an i^{th} subtree based on an i^{th} data subset in the N data subsets, wherein i is any positive integer from 1 to N, a total of N subtrees are obtained, and the i^{th} subtree is used to search for data comprised in the i^{th} data subset; and
performing a merge operation on the N subtrees to obtain a tree of the second dataset, wherein the tree is used to search for the data comprised in the second dataset.

2. The method according to claim 1, wherein the sorting a first dataset to obtain a second dataset comprises:
determining a first data group, wherein the first data group is a result of sorting a part of data in the first dataset;
comparing data at each first location in the first data group with target data at a location corresponding to the first location in a second data group, to determine a target location, wherein the target location is a location into which the target data is inserted in the first data group, the second data group and the first data group comprise a same amount of data, any data comprised in the second data group is the target data, and the target data is data other than the part of data in the first dataset; and
inserting the target data into the target location, to obtain the second dataset.

3. The method according to claim 1 or 2, wherein the method further comprises:
determining a third data group, wherein the third data group comprises a plurality of target keys, the target key is a key of a target group, and the third data group and the second dataset comprise a same amount of data;
comparing data at each second location in the second dataset with data at a location corresponding to the second location in the third data group, to determine at least one piece of data that matches the target key and that is in the second dataset;
determining the at least one piece of data as the target group; and
writing information about the target group and the target group into an external memory, wherein the information about the target group comprises the target key.

4. The method according to claim 3, wherein the information about the target group further comprises one or more of an amount of the at least one piece of data, a maximum value of the at least one piece of data, a minimum value of the at least one piece of data, and a summation result of the at least one piece of data.

5. The method according to any one of claims 1 to 4, wherein the method further comprises:
determining a target execution plan, wherein the target execution plan indicates an operation to be performed on the first dataset.

6. The method according to any one of claims 1 to 5, wherein the method further comprises:
receiving a first request from a processor, wherein the first request is used to request to process the first dataset; and
obtaining the first dataset based on the first request.

7. The method according to claim 6, wherein the method further comprises:
both the acceleration apparatus and the processor are disposed in a computing device, and the acceleration apparatus is connected to the processor by using peripheral component interconnect express PCIe.

8. A data processing method, applied to an acceleration apparatus, wherein the method comprises:
sorting a first dataset to obtain a second dataset, wherein the first dataset and the second dataset each comprise a plurality of pieces of data;
determining a third data group, wherein the third data group comprises a plurality of first keys, the first key is a key of a target group, and the third data group and the second dataset comprise a same amount of data;
comparing data at each second location in the second dataset with data at a location corresponding to the second location in the third data group, to determine at least one piece of data that matches a target key and that is in the second dataset;
determining the at least one piece of data as the target group; and
writing information about the target group and the target group into an external memory, wherein the information about the target group comprises the target key.

9. The method according to claim 8, wherein the information about the target group further comprises one or more of an amount of the at least one piece of data, a maximum value of the at least one piece of data, a minimum value of the at least one piece of data, and a summation result of the at least one piece of data.

10. A data processing method, applied to an acceleration apparatus, wherein the method comprises:
obtaining a first dataset, wherein the first dataset comprises a plurality of pieces of data;
determining a first data group, wherein the first data group is a result of sorting a part of data in the first dataset;
comparing data at each first location in the first data group with target data at a location corresponding to the first location in a second data group, to determine a target location, wherein the target location is a location into which the target data is inserted in the first data group, the second data group and the first data group comprise a same amount of data, any data comprised in the second data group is the target data, and the target data is data other than the part of data in the first dataset; and
inserting the target data into the target location, to obtain a second dataset.

11. An acceleration apparatus, comprising:
a sorting module, configured to sort a first dataset to obtain a second dataset, wherein the first dataset and the second dataset each comprise a plurality of pieces of data; and
a tree creation module, configured to divide the second dataset to obtain N data subsets, wherein each of the N data subsets comprises at least two pieces of consecutively arranged data in the second dataset, and N is an integer greater than or equal to 2; determine an i^{th} subtree based on an i^{th} data subset in the N data subsets, wherein i is any positive integer from 1 to N, a total of N subtrees are obtained, and the i^{th} subtree is used to search for data comprised in the i^{th} data subset; and perform a merge operation on the N subtrees to obtain a tree of the second dataset, wherein the tree is used to search for the data comprised in the second dataset.

12. The apparatus according to claim 11, wherein the sorting module is specifically configured to:
determine a first data group, wherein the first data group is a result of sorting a part of data in the first dataset;
compare data at each first location in the first data group with target data at a location corresponding to the first location in a second data group, to determine a target location, wherein the target location is a location into which the target data is inserted in the first data group, the second data group and the first data group comprise a same amount of data, any data comprised in the second data group is the target data, and the target data is data other than the part of data in the first dataset; and
insert the target data into the target location, to obtain the second dataset.

13. The apparatus according to claim 11 or 12, wherein the apparatus further comprises a grouping module, configured to:
determine a third data group, wherein the third data group comprises a plurality of target keys, the target key is a key of a target group, and the third data group and the second dataset comprise a same amount of data;
compare data at each second location in the second dataset with data at a location corresponding to the second location in the third data group, to determine at least one piece of data that matches the target key and that is in the second dataset;
determine the at least one piece of data as the target group; and
write information about the target group and the target group into an external memory, wherein the information about the target group comprises the target key.

14. The apparatus according to claim 13, wherein the information about the target group further comprises one or more of an amount of the at least one piece of data, a maximum value of the at least one piece of data, a minimum value of the at least one piece of data, and a summation result of the at least one piece of data.

15. The apparatus according to any one of claims 11 to 14, wherein the apparatus further comprises an execution plan determining module, configured to determine a target execution plan, wherein the target execution plan indicates an operation to be performed on the first dataset.

16. The apparatus according to claim 15, wherein the apparatus further comprises a data obtaining module, configured to receive a first request from a processor, wherein the first request is used to request to process the first dataset; and obtain the first dataset based on the first request.

17. The apparatus according to claim 16, wherein both the apparatus and the processor are disposed in a first device, and the apparatus is connected to the processor by using peripheral component interconnect express PCIe.

18. An acceleration apparatus, comprising:
a sorting module, configured to sort a first dataset to obtain a second dataset, wherein the first dataset and the second dataset each comprise a plurality of pieces of data; and
a grouping module, configured to determine a third data group, wherein the third data group comprises a plurality of first keys, the first key is a key of a target group, and the third data group and the second dataset comprise a same amount of data; compare a first key at each second location in the third data group with data at a location corresponding to the second location in the second dataset, to determine at least one piece of data that matches a target key and that is in the second dataset; determine the at least one piece of data as the target group; and write information about the target group and the target group into a hard disk drive, wherein the information about the target group comprises the target key.

19. An acceleration apparatus, comprising:
a data obtaining module, configured to obtain a first dataset, wherein the first dataset comprises a plurality of pieces of data; and
a sorting module, configured to determine a first data group, wherein the first data group is a result of sorting a part of data in the first dataset; compare data at each first location in the first data group with target data at a location corresponding to the first location in a second data group, to determine a target location, wherein the target location is a location into which the target data is inserted in the first data group, the second data group and the first data group comprise a same amount of data, any data comprised in the second data group is the target data, and the target data is data other than the part of data in the first dataset; and insert the target data into the target location, to obtain a second dataset.

20. An acceleration apparatus, comprising a processor and a power supply circuit, wherein the power supply circuit is configured to supply power to the processor, and the processor is configured to perform the method according to any one of claims 1 to 7, or claims 8 and 9, or claim 10.

21. A computing device, comprising the acceleration apparatus according to claim 20.

22. A computing device, wherein the computing device comprises an acceleration apparatus and a processor, wherein
the processor is configured to send a first request to the acceleration apparatus, wherein the first request is used to request the acceleration apparatus to process a first dataset; and
the acceleration apparatus is configured to perform the method according to any one of claims 1 to 7, or claims 8 and 9, or claim 10, to process the first dataset.

23. A computer program product comprising instructions, wherein when the instructions are run by a computing device cluster, the computing device cluster is enabled to perform the method according to any one of claims 1 to 7, or claims 8 and 9, or claim 10.

24. A computer-readable storage medium, wherein the storage medium stores a computer program or instructions, and when the computer program or the instructions are executed by a communication apparatus, the method according to any one of claims 1 to 7, or claim 8, 9, or 10 is implemented.
